# EUROPEAN PATENT SPECIFICATION

(11) **EP 2 763 437 B1**
(45) Date of publication and mention of the grant of the patent: **18.01.2017**
(21) Application number: 12837384.2
(22) Date of filing: 02.08.2012
(51) Int. Cl.: H04W 76/02, H04W 84/18, H04W 88/04

(54) **ONBOARD COMMUNICATION INSTRUMENT AND METHOD FOR CONTROLLING ONBOARD COMMUNICATION INSTRUMENT**
BORDKOMMUNIKATIONSINSTRUMENT UND VERFAHREN ZUR STEUERUNG DES BORDKOMMUNIKATIONSINSTRUMENTS
INSTRUMENT DE COMMUNICATION EMBARQUÉ ET PROCÉDÉ DE COMMANDE D'INSTRUMENT DE COMMUNICATION EMBARQUÉ

(30) Priority: 26.09.2011 JP 2011209066
(43) Date of publication of application: 06.08.2014
(73) Proprietor: NEC Corporation, Tokyo 108-8001 (JP)
(72) Inventor: SAKATA, Masayuki, Tokyo 108-8001 (JP)
(74) Representative: Vossius & Partner Patentanwälte Rechtsanwälte mbB
(86) International application number: PCT/JP2012/069722
(87) International publication number: WO 2013/046919

(56) References cited:
- WO-A1-2011/111282
- WO-A1-2011/111282
- JP-A- 2006 166 307
- JP-A- 2008 205 817
- JP-A- 2011 003 989
- US-A1- 2008 136 670
- US-A1- 2008 200 121
- TSUTOMU TSUBOI ET AL: "Dual Receiver Communication System for DSRC", FUTURE GENERATION COMMUNICATION AND NETWORKING, 2008. FGCN '08. SECOND INTERNATIONAL CONFERENCE ON, IEEE, PISCATAWAY, NJ, USA, 13 December 2008 (2008-12-13), pages 459-464, XP031383955, ISBN: 978-0-7695-3431-2

## Description

### Technical Field

The present invention relates to an onboard communication apparatus that performs vehicle to vehicle communication and road to vehicle communication and to a control method of the onboard communication apparatus.

### Background Art

For the purpose of promoting traffic safety, Intelligent Transport Systems (ITS) are being investigated in which an onboard communication apparatus that is installed in a vehicle performs wireless communication with an onboard communication apparatus that is installed in another vehicle and with access points (such as a roadside communication apparatuses) that offer various services (for example, refer to Patent Document 1 (JP 2009-147652A)).

In the ITS described above, an onboard communication apparatus is being investigated that uses two channels to perform wireless communication. One channel is referred to as the CCH (Control CHannel) and is a channel having a predetermined frequency that is used when transmitting important information or information relating to safety. The other channel is referred to as the SCH (Service CHannel) and is a channel configured to allow switching among a plurality of channels having different frequencies such as watching TV and is used to transmit information relating to pleasure, convenience, or entertainment.

### Related Art Document

### Patent Document

US 2008/136670 discloses a vehicle information system. A base station communicates with a road side unit (RSU). This then may communicate with vehicle on-board units (OBU) either directly or via other on-board units i.e. via multi hop or relaying. To set up a communication, the OBU broadcasts a request for a carrier vehicle, and listens for a response. If a reply is received, the OBU switches to a service channel to communicate over.
US 2008/200121 also discloses a vehicle to roadside and vehicle to vehicle communication system. Wireless on board communication units in the vehicles may communicate with a roadside communication device either directly or via another vehicle on board communication device.

### Summary of the Invention

### Problem to be Solved by the Invention

An onboard communication apparatus uses services that are offered by roadside communication apparatuses by way of SCH, but in some cases, the onboard communication apparatus will, with the movement of the vehicle, pass beyond the range that can be reached by radio waves of a roadside communication apparatus. In such cases, the problem arises that the onboard communication apparatus is no longer able to obtain the channel use information of the roadside communication apparatus and is unable to know what kind of services are offered on which channels.

It is an object of the present invention to provide an onboard communication apparatus and a control method of the onboard communication apparatus that can obtain channel use information even when the onboard communication apparatus is outside of the range that can be reached by radio waves of a roadside communication apparatus.

### Means for Solving the Problem

A multi-hop function is a scheme of transmitting information by way of a plurality of onboard communication apparatuses using a first channel that is referred to as a CCH (Control CHannel) and that is used to transmit or receive important information or information relating to safety and a second channel referred to as a SCH (Service CHannel) that is selected for using multi-hop from among a plurality of channels that are used to transmit or receive various information items or to receive offered services. When the first channel is used at the time of initial information transmission, the next onboard communication apparatus uses the second channel to transmit information, and when the second channel is used at the time of initial or subsequent information transmission, the next onboard communication apparatus uses the second channel to transmit information.

In order to achieve the above object, according to the present invention, claim 1 sets out an onboard communication apparatus that is installed in a vehicle and that is configured to perform communication with a roadside communication apparatus .

Also in order to achieve the above object, the present invention relates to a method as set out in claim 3.

According to the present invention, even when an onboard communication apparatus is outside of the range that can be reached by radio waves of a roadside communication apparatus, the onboard communication apparatus is able to use multi-hop communication by way of other onboard communication apparatuses that are within the range that can be reached by radio waves of the roadside communication apparatus to acquire channel use information and receive services of the roadside communication apparatus.

### Brief Description of the Drawings

FIG. 1 is a block diagram showing the configuration of an onboard communication apparatus according to an exemplary embodiment of the present invention.
FIG. 2 is a view for describing operations of the onboard communication apparatus shown in FIG. 1.
FIG. 3 is a view for describing other operations of the onboard communication apparatus shown in FIG. 1.
FIG. 4 is a flow chart showing an example of the operations of the onboard communication apparatus shown in FIG. 1.

### Exemplary Embodiments

An exemplary embodiment of the present invention is next described with reference to the accompanying drawings.

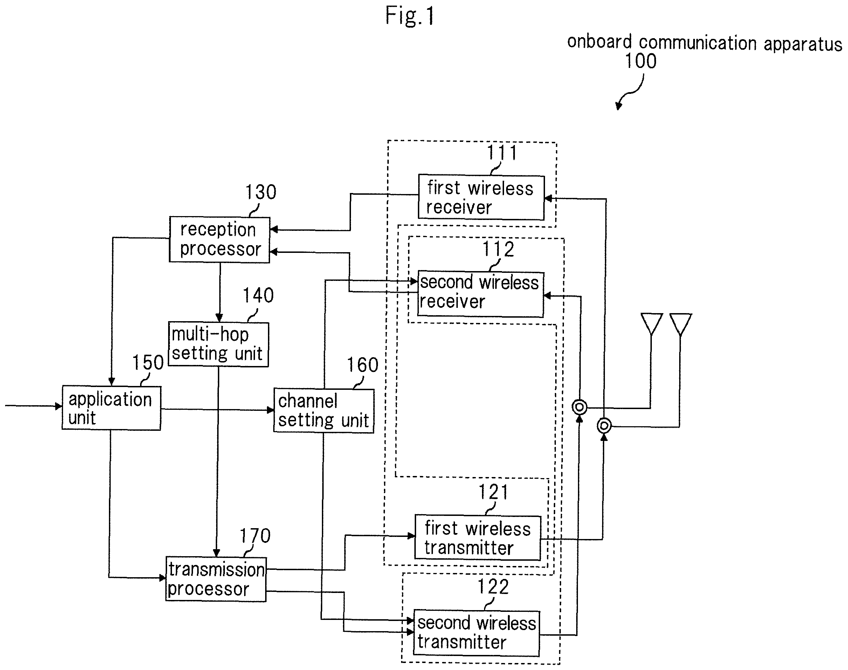

FIG. 1 is a block diagram showing the configuration of onboard communication apparatus 100 of the exemplary embodiment of the present invention.

Onboard communication apparatus 100 shown in FIG. 1 has first wireless receiver 111, second wireless receiver 112, first wireless transmitter 121, second wireless transmitter 122, reception processor 130, multi-hop setting unit 140, application unit 150, channel setting unit 160, and transmission processor 170.

First wireless receiver 111 and first wireless transmitter 121 make up the first communication unit, and second wireless receiver 112 and second wireless transmitter 122 make up the second communication unit. In addition, application unit 150 is one example of the determination unit.

Channels having frequencies that differ from each other are set for each of first wireless receiver 111 and second wireless receiver 112. First wireless receiver 111 and second wireless receiver 112 respectively receive packets transmitted by way of channels that are set for each other, and supply the received packets to reception processor 130.

Here, a channel (first channel) having a predetermined frequency is set as the CCH for first wireless receiver 111. In addition, one appropriate channel from among a plurality of SCH is set according to conditions for second wireless receiver 112. For example, a channel (second channel) that is used when transmitting a multi-hop message of the second and subsequent hops together with the CCH, or a third channel that differs from the first and second channels and that is used in the offering of services by a roadside communication apparatus is set as the SCH.

First wireless transmitter 121 is set to the same channel as first wireless receiver 111, and transmits packets by way of the set channel.

Second wireless transmitter 122 is set to the same channel as second wireless receiver 112, and transmits packets by way of the set channel.

Reception processor 130 supplies packets that are supplied from first and second wireless receivers to application unit 150 if they are packets addressed to onboard communication apparatus 100, and supplies the packets to multi-hop setting unit 140 if they are control packets for multi-hop communication that transfers packets to other onboard communication apparatuses.

When packets supplied from first and second wireless receivers are broadcast packets to be received by all onboard communication apparatuses, and moreover, are control packets for multi-hop communication, reception processor 130 supplies the packets to both application unit 150 and multi-hop setting unit 140.

Multi-hop setting unit 140 checks the destinations and number of hops of the packets that are supplied from reception processor 130, and if further transmission to other onboard communication apparatuses is necessary, sets the transmission of the packets to transmission processor 170.

Application unit 150 carries out processing according to the packets that are supplied from reception processor 130 and sets in transmission processor 170 the transmission of packets to, for example, other onboard communication apparatuses as necessary. In addition, when an indication to designate a SCH (for example, the third channel) desired for use is received as input, application unit 150 notifies this third channel that was designated to channel setting unit 160.

Channel setting unit 160 switches the channel that is set to second wireless receiver 112 and second wireless transmitter 122 (second communication unit) according to the notification from application unit 150. Here, when notified from application unit 150 that a third channel has been designated, channel setting unit 160 sets the third channel to the second communication unit.

Transmission processor 170 transmits packets to the appropriate first or second wireless transmitter in accordance with the setting of multi-hop setting unit 140 and application unit 150.

The operations of onboard communication apparatus 100 of the present exemplary embodiment are next described.

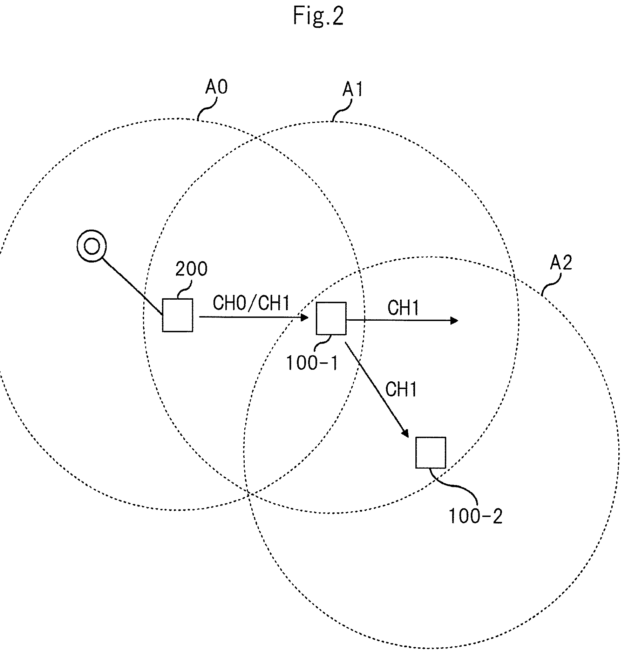

FIG. 2 shows the operations at the time of transfer of channel use information by means of roadside communication apparatus 200 and onboard communication apparatus 100.

A first channel is assigned as the CCH to channel CH0, and a second channel is assigned as the SCH to channel CH1.

The following explanation regards a case in which a multi-hop message that is transmitted by the first channel (CH0) is transmitted by the second channel (CH1) at the time of the next hop, but the multi-hop message may be transmitted using only the second channel (CH1).

Roadside communication apparatus 200 is configured to enable communication by first to fourth channels.

In the plurality of channels used by roadside communication apparatus 200, it is here assumed that the third channel that is used in communication between onboard communication apparatus 100 and a network (the Internet) by way of roadside communication apparatus 200 is assigned to channel CH2, and the fourth channel that offers the data of neighborhood moving pictures by streaming is assigned to channel CH3.

The second channel (CH1) need not be restricted to the transmission and reception of multi-hop messages and may also be used as a channel by which roadside communication apparatus 200 offers services.

As shown in FIG. 2, onboard communication apparatus 100-1 is present within communicable range A0 of roadside communication apparatus 200 and communicates with roadside communication apparatus 200.

Here, onboard communication apparatus 100-2 is not present within communicable range A0 of roadside communication apparatus 200 and is therefore not able to communicate directly with roadside communication apparatus 200. Onboard communication apparatus 100-2 is present within communicable range A1 of onboard communication apparatus 100-1.

Roadside communication apparatus 200 broadcast-transmits packets indicating the channel use information by way of the first channel (CH0) or the second channel (CH1). At this time, the number of hops is designated according to the content of the service and the packets are then transmitted.

For example, when information is offered to an onboard communication apparatus that is in a range not reached by the radio waves of the roadside communication apparatus, the number of hops of packets that are to be transmitted from the roadside communication apparatus is designated as at least "1" and the information is transferred as far as the onboard communication apparatus that is outside of the radio-wave range by transferring the packets by means of multi-hop communication via onboard communication apparatuses.

In contrast, when there is no need to offer information to an onboard communication apparatus that is a range not reached by the radio waves of the roadside communication apparatus, the number of hops of packets that are to be transmitted from the roadside communication apparatus is designated as "0" to limit transfer.

As described hereinabove, the function of transferring packets of an onboard communication apparatus that communicates outside of the radio-wave range of a roadside communication apparatus can be controlled by arbitrarily setting the number of hops of multi-hop communication.

When packets that indicate channel use information are transmitted from roadside communication apparatus 200 by using the first channel (CH0), first wireless receiver 111 in onboard communication apparatus 100-1 receives the packets and supplies the packets to reception processor 130.

When packets that indicate channel use information are transmitted from roadside communication apparatus 200 by using the second channel (CH1), second wireless receiver 112 in onboard communication apparatus 100-1 receives the packets and supplies the packets to reception processor 130.

When packets supplied from first wireless receiver 111 or from second wireless receiver 112 are broadcast packets that contain channel use information, reception processor 130 supplies the packets to application unit 150. When these packets are control packets for multi-hop communication, reception processor 130 simultaneously supplies the packets to multi-hop setting unit 140.

Application unit 150 acquires the channel use information that is indicated in the packets that are supplied from reception processor 130.

This channel use information includes information of each of the channels for the plurality of services offered by roadside communication apparatus 200, and application unit 150 has a configuration that is capable of selecting a desired channel from this channel information.

For example, when channel CH3 is selected, the setting of the fourth channel (CH3) is notified to channel setting unit 160, and channel setting unit 160 sets this fourth channel (CH3) to second wireless receiver 112 and second wireless transmitter 122 (the second communication unit) in accordance with this setting.

When the value obtained by subtracting "1" from the number of hops of packets that has been set is not "0", multi-hop setting unit 140 transmits the packets that contain the channel use information to transmission processor 170 and transmits the packets to second wireless transmitter 122 by way of channel CH1.

When second wireless transmitter 122 has been set by channel setting unit 160 to a channel other than the second channel (CH1) that is an SCH for transmitting multi-hop messages, this message is not transmitted.

In onboard communication apparatus 100-2, first wireless receiver 111 is unable to directly receive radio waves from roadside communication apparatus 200 and to receive channel use information. Accordingly, the channel use information is received by a multi-hop message from onboard communication apparatus 100-1.

When the second channel (CH1) is set to second wireless receiver 112, second wireless receiver 112 receives packets from onboard communication apparatus 100-1 and supplies the packets to reception processor 130.

When the packets supplied from second wireless receiver 112 are broadcast packets that contain channel use information, reception processor 130 supplies these packets to application unit 150. If these packets are control packets for multi-hop communication, reception processor 130 simultaneously supplies the packets to multi-hop setting unit 140.

Application unit 150 acquires the channel use information that is indicated in the packets that are supplied from reception processor 130. Channel use information contains channel information of the services offered by roadside communication apparatus 200, and application unit 150 has a configuration that is capable of selecting a desired channel from this channel information. For example, upon selecting channel CH3, application unit 150 notifies channel setting unit 160 of the channel settings that is to be used for channel CH3, and channel setting unit 160 sets channel CH3 in second wireless receiver 112 and second wireless transmitter 122 (the second communication unit) in accordance with this settings.

When the value obtained by subtracting "1" from the number of hops of packets that has been set is not "0", multi-hop setting unit 140 transmits the packets that contain the channel use information to transmission processor 170. Transmission processor 170 transmits the packets to second wireless transmitter 122 by way of channel CH1. When second wireless transmitter 122 has been set by channel setting unit 160 to a channel other than the second channel (CH1) of the SCH that transmits multi-hop messages, transmission processor 170 does not transmit this message.

Thus, by means of the multi-hop transmission by onboard communication apparatus 100-1 via channel CH1 of channel use information that is received by way of channel CH0 or channel CH1, onboard communication apparatus 100-2 that is not present within communicable range A0 of roadside communication apparatus 200 is able to acquire the channel use information.

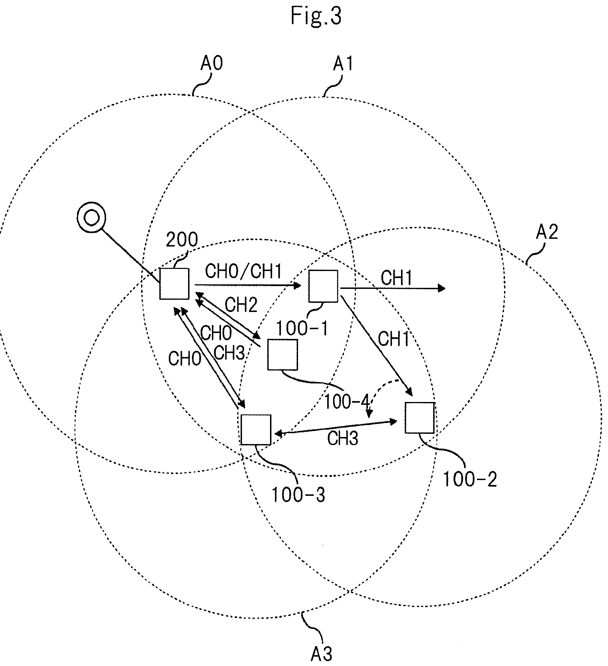

FIG. 3 shows the operations realized by onboard communication apparatuses 100 while a service is being provided from roadside communication apparatus 200.

As shown in FIG. 3, onboard communication apparatus 100-1 is present within the communicable range A0 of roadside communication apparatus 200, and performs multi-hop transmission by way of channel CH1 of channel use information that was acquired from roadside communication apparatus 200 via channel CH0 or channel CH1.

Onboard communication apparatus 100-2 is not present within the communicable range A0 of roadside communication apparatus 200, and therefore is unable to directly communicate with roadside communication apparatus 200. However, onboard communication apparatus 100-2 is present within the communicable range A1 of onboard communication apparatus 100-1, and therefore acquires channel use information by way of channel CH1 from onboard communication apparatus 100-1 as shown in FIG. 2.

Onboard communication apparatus 100-3 is present within the communicable range A0 of roadside communication apparatus 200, acquires channel use information from roadside communication apparatus 200 by way of channel CH0 or channel CH1, and connects to the Internet via roadside communication apparatus 200 by way of channel CH3. In addition, onboard communication apparatus 100-3 is present within communicable range A2 of onboard communication apparatus 100-2.

Onboard communication apparatus 100-4 is present within communicable range A0 of roadside communication apparatus 200, acquires channel use information from roadside communication apparatus 200 by way of channel CH0 or channel CH1, and receives neighborhood moving pictures from roadside communication apparatus 200 by way of channel CH2.

It is here assumed that input designating channel CH3 is applied to onboard communication apparatus 100-2.

In onboard communication apparatus 100-2, application unit 150 notifies channel setting unit 160 that channel CH3 has been designated. Channel setting unit 160 receives this notification and sets channel CH3 to the second communication unit.

Onboard communication apparatus 100-2 is not present within communicable range A0 of roadside communication apparatus 200 and is therefore unable to directly communicate with roadside communication apparatus 200. However, the second communication unit uses the multi-hop function held by other onboard communication apparatuses to communicate with the roadside communication apparatus by way of channel CH3.

Here, onboard communication apparatus 100-3 is present within the communicable range A2 of onboard communication apparatus 100-2 and carries out communication with roadside communication apparatus 200 by way of channel CH3.

The second communication unit performs communication with onboard communication apparatus 100-3 by way of channel CH3 and communicates with roadside communication apparatus 200 by way of onboard communication apparatus 100-3.

In other words, the second communication unit communicates with roadside communication apparatus 200 by means of multi-hop communication that is performed by other onboard communication apparatuses that are present within the communicable range A2 of onboard communication apparatus 100-2 and that use the same channel as the channel that is set to the second communication unit. The route that reaches roadside communication apparatus 200 by way of other onboard communication apparatuses that use the same channel as the SCH can be searched in accordance with protocol such as OLSR (Optimized Link State Routing).

When an onboard communication apparatus that uses channel CH3 is not present within the communicable range A2 of onboard communication apparatus 100-2, onboard communication apparatus 100-2 is not able to communicate with roadside communication apparatus 200. In FIG. 3, onboard communication apparatus 100-4 that communicates with roadside communication apparatus 200 is present within the communicable range A2 of onboard communication apparatus 100-2, but onboard communication apparatus 100-4 is using channel CH2 and is therefore unable to perform multi-hop communication by way of channel CH3. As a result, onboard communication apparatus 100-2 is unable to communicate with roadside communication apparatus 200 by way of onboard communication apparatus 100-4.

When input indicating the end of the use of channel CH3 is received in onboard communication apparatus 100-2, application unit 150 notifies this indication to channel setting unit 160. Channel setting unit 160 receives this notification and returns the second communication unit to channel CH1.

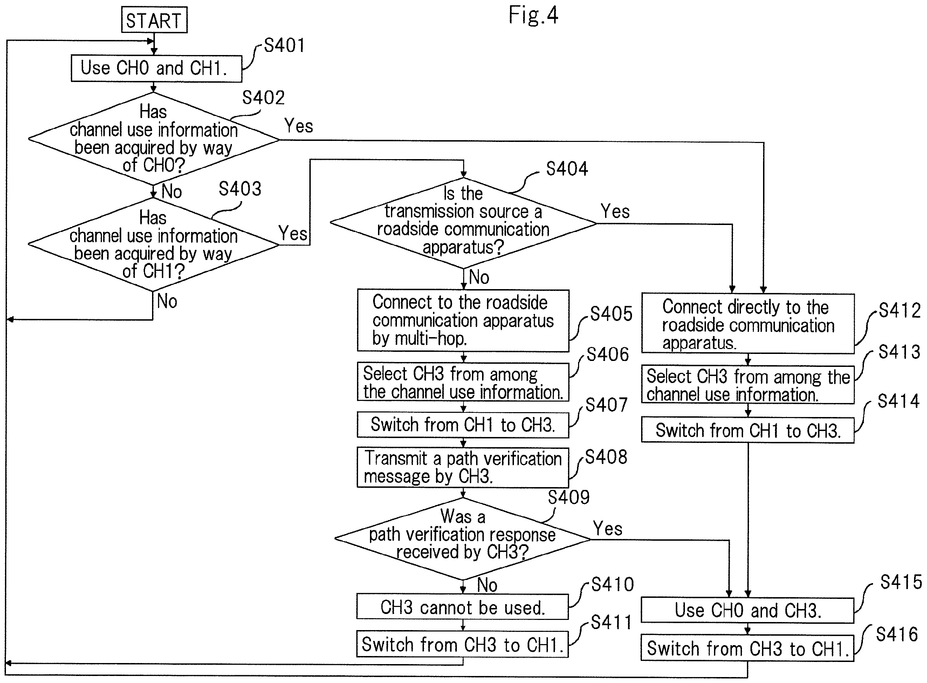

FIG. 4 is a flow chart showing the operations of onboard communication apparatus 100 in this exemplary embodiment.

First wireless receiver 111 and first wireless transmitter 121 (the first communication unit) are set to channel CH0 and use channel CH0 to communicate. Channel setting unit 160 sets channel CH1 to the second communication unit. The second communication unit uses channel CH1 to communicate (Step S401).

Application unit 150 determines whether or not channel use information has been acquired by way of channel CH0 (Step S402).

If channel use information has been acquired by way of channel CH0 (YES in Step S402), application unit 150 determines that onboard communication apparatus 100 is directly connected to roadside communication apparatus 200 (Step S412).

If channel use information has not been acquired by way of channel CH0 (NO in Step S402), application unit 150 determines whether or not channel use information has been acquired by way of channel CH1 (Step S403).

If channel use information has not been acquired by way of channel CH1 (NO in Step S403), application unit 150 returns to the process of Step S401.

If channel use information has been acquired by way of channel CH1 (YES in Step S403), application unit 150 checks whether or not the transmission source of packets that contain this channel use information is roadside communication apparatus 200 (Step S404). If the transmission source is roadside communication apparatus 200 (YES in Step S404), application unit 150 determines that onboard communication apparatus 100 is directly connected to roadside communication apparatus 200 (Step S412). If the transmission source is another onboard communication apparatus (NO in Step S404), application unit 150 determines that onboard communication apparatus 100 is connected to roadside communication apparatus 200 via another onboard communication apparatus by means of multi-hop communication (Step S405).

It is assumed that input has been received indicating that channel CH3 is designated from among the plurality of channels that are designated in the channel use information (Step S406). When no particular channel selection is made, the process returns to Step S401.

Application unit 150 notifies channel setting unit 160 that channel CH3 has been designated, and channel setting unit 160 receives this notification and switches the channel that is set in the second communication unit from channel CH1 to channel CH3.

At this time, though the connection to roadside communication apparatus 200 is to be multi-hop connection, there is a possibility that the route is not secured. Therefore, application unit 150 uses channel CH3 to transmit a path verification message to roadside communication apparatus 200 (Step S408). When another onboard communication apparatus that uses the same CH3 is present on the path to roadside communication apparatus 200, the transfer of the multi-hop message is carried out, and roadside communication apparatus 200 transmits a path verification response message.

When there is a path as far as roadside communication apparatus 200 by way of channel CH3, the path verification response message is received (YES in Step S409), and application unit 150 begins the use of channel CH3 (Step S415). If there is no path as far as roadside communication apparatus 200 by way of channel CH3, the path verification response message cannot be received (NO in Step S409), and because channel CH3 cannot be used (Step S410), application unit 150 switches the channel to the original channel CH1 (Step S411) and the process returns to Step S401.

When it is determined that a direct connection is established with the roadside communication apparatus (Step S412), it is assumed that input has been received indicating that channel CH3 is designated from among the plurality of channels that are designated in the channel use information (Step S413). When no particular channel is selected, the process returns to Step S401.

Application unit 150 notifies channel setting unit 160 that channel CH3 has been designated, and channel setting unit 160 receives this notification and switches the channel that is set in the second communication unit from channel CH1 to channel CH3 (Step S414).

As a result of switching channels, the second communication unit uses channel CH3 to communicate. The first communication unit continues to use channel CH0 to communicate (Step S415). As a result, the provision of the services of roadside communication apparatus 200 can be received by using channel CH3.

Next, when input has been received indicating the use of channel CH3 will be ending, application unit 150 notifies this indication to channel setting unit 160 and the process returns to Step S401. Channel setting unit 160 receives this notification and switches the channel that is set in the second communication unit from channel CH3 to channel CH1 (Step S416).

Thus, according to the present exemplary embodiment, onboard communication apparatus 100 is able to acquire the channel use information of roadside communication apparatus 200 directly or via other onboard communication apparatuses by means of multi-hop, and by switching a channel that is to be used, and is able to receive the offered services of the roadside communication apparatus even when the onboard communication apparatus is outside of the range that can be reached by the radio waves of the roadside communication apparatus.

The present invention has been described with reference to the embodiments. However, it should be understood by those skilled in the art that the structure and details of the present invention may be changed in various manners without departing from the scope of the present invention.

## Claims

1. An onboard communication apparatus (100) that is installed in a vehicle and that is configured to perform communication with a roadside communication apparatus that provides channel use information and performs communication with other onboard communication apparatuses that are installed in other vehicles, the channel use information including at least information that indicate a plurality of channels having different frequencies, said onboard communication apparatus (100) comprising:
a first communication unit (121) that is configured to communicate by way of a channel whose frequency band is fixed;
a second communication unit (122) that is configured to communicate by way of a channel that differs from the channel used in said first communication unit (121);
a determination unit that is configured to determine whether or not communication with said roadside communication apparatus is direct communication that is not relayed by another onboard communication apparatus;
an application unit (150) that is configured to designate one channel from among the plurality of channels that are included in the channel use information; and
a channel setting unit (160) that is configured to switch the channel of said second communication unit (122) to a designated channel that is designated by said application unit (150),
wherein, when direct communication with said roadside communication apparatus is not possible, said second communication unit (122) communicates with said roadside communication apparatus by way of another onboard communication apparatus that is communicating with said roadside communication apparatus, and
wherein said application unit (150) uses the designated channel to transmit a path verification message to said roadside communication apparatus when receiving the channel use information through said second communication unit (122), and causes said channel setting unit (160) to perform a channel switching operation to the designated channel when receiving, from said roadside communication apparatus, a path verification response message that is a response to the path verification message.

2. The onboard communication apparatus (100) according to claim 1, wherein, regarding packets that are received in said first communication unit (121) or said second communication unit (122), said onboard communication apparatus (100) is configured to check whether or not multi-hop transfer is necessary, and when further transmission to another onboard communication apparatus is necessary, sets transmission of data from said second communication unit (122).

3. A control method of an onboard communication apparatus (100) that is installed in a vehicle and that performs communication with a roadside communication apparatus that provides channel use information and performs communication with other onboard communication apparatuses that are installed in other vehicles, the channel use information including at least information that indicate a plurality of channels having different frequencies, said onboard communication apparatus (100) comprising:
setting a channel whose frequency band is fixed in a first communication unit (121) and setting a channel that differs from the channel that is used in said first communication unit (121) in a second communication unit (122);
communicating with said roadside communication apparatus by way of said first communication unit (121) or said second communication unit (122);
determining whether or not communication with said roadside communication apparatus is direct communication that is not relayed by another onboard communication apparatus;
designating one channel from among the plurality of channels that are included in the channel use information; and
switching the channel of said second communication unit (122) to a designated channel
that is designated by said application unit (150),
wherein when not performing direct communication with said roadside communication apparatus, said second communication unit (122) communicates with said roadside communication apparatus by way of another onboard communication apparatus that is communicating with said roadside communication apparatus, and
wherein, when receiving the channel use information through said second communication unit (122) using the designated channel to transmit a path verification message to said roadside communication apparatus, and causes said channel setting unit (160) to perform a channel switching operation to the designated channel when receiving, from said roadside communication apparatus, a path verification response message that is a response to the path verification message.

4. The control method of the onboard communication apparatus (100) according to claim 3, wherein, regarding packets that are received in said first communication unit (121) or said second communication unit (122), said onboard communication apparatus (100) checks whether or not multi-hop transfer is necessary, and if further transmission to another onboard communication apparatus is necessary, sets transmission of data from said second communication unit (122).

## Patentansprüche

1. Bordseitige Kommunikationsvorrichtung (100), die in einem Fahrzeug eingebaut und konfiguriert ist, eine Kommunikation mit einer Kommunikationsvorrichtung am Straßenrand durchzuführen, die Kanalnutzungsinformationen bereitstellt und eine Kommunikation mit anderen bordseitigen Kommunikationsvorrichtungen durchführt, die in andere Fahrzeuge eingebaut sind, wobei die Kanalnutzungsinformationen mindestens Informationen umfassen, die mehrere Kanäle anzeigen, die unterschiedliche Frequenzen aufweisen, wobei die bordseitige Kommunikationsvorrichtung (100) aufweist:
eine erste Kommunikationseinheit (121), die konfiguriert ist, über einen Kanal zu kommunizieren, dessen Frequenzband fest ist;
eine zweite Kommunikationseinheit (122), die konfiguriert ist, über einen Kanal zu kommunizieren, der sich von dem Kanal unterscheidet, der in der ersten Kommunikationseinheit (121) verwendet wird;
eine Feststellungseinheit, die konfiguriert ist, festzustellen, ob die Kommunikation mit der Kommunikationsvorrichtung am Straßenrand eine direkte Kommunikation ist, die nicht durch eine andere bordseitige Kommunikationsvorrichtung weitergeleitet wird;
eine Anwendungseinheit (150), die konfiguriert ist, einen Kanal aus den mehreren Kanälen zu benennen, die in den Kanalnutzungsinformationen enthalten sind; und
eine Kanaleinstelleinheit (160), die konfiguriert ist, den Kanal der zweiten Kommunikationseinheit (122) auf einen benannten Kanal umzuschalten, der durch die Anwendungseinheit (150) benannt wird,
wobei, wenn keine direkte Kommunikation mit der Kommunikationsvorrichtung am Straßenrand möglich ist, die zweite Kommunikationseinheit (122) mit der Kommunikationsvorrichtung am Straßenrand über eine andere bordseitige Kommunikationsvorrichtung kommuniziert, die mit der Kommunikationsvorrichtung am Straßenrand kommuniziert, und
wobei die Anwendungseinheit (150) den benannten Kanal verwendet, um eine Wegverifizierungsnachricht an die Kommunikationsvorrichtung am Straßenrand zu senden, wenn die Kanalnutzungsinformationen durch die zweite Kommunikationseinheit (122) empfangen werden, und die Kanaleinstelleinheit (160) veranlasst, eine Kanalumschalt-operation auf den benannten Kanal durchzuführen, wenn von der Kommunikationsvorrichtung am Straßenrand eine Wegverifizierungsantwortnachricht empfangen wird, die eine Antwort auf die Wegverifizierungsnachricht ist.

2. Bordseitige Kommunikationsvorrichtung (100) nach Anspruch 1, wobei hinsichtlich Paketen, in der ersten Kommunikationseinheit (121) oder der zweiten Kommunikationseinheit (122) empfangen werden, die bordseitige Kommunikationsvorrichtung (100) konfiguriert ist, zu überprüfen, ob ein Multihop-Transfer notwendig ist, und wenn eine weitere Übertragung zu einer anderen bordseitigen Kommunikationsvorrichtung notwendig ist, die Übertragung von Daten von der zweiten Kommunikationseinheit (122) einstellt.

3. Steuerverfahren einer bordseitigen Kommunikationsvorrichtung (100), die in einem Fahrzeug eingebaut ist und die eine Kommunikation mit einer Kommunikationsvorrichtung am Straßenrand durchführt, die Kanalnutzungsinformationen bereitstellt und eine Kommunikation mit anderen bordseitigen Kommunikationsvorrichtungen durchführt, die in andere Fahrzeuge eingebaut sind, wobei die Kanalnutzungsinformationen mindestens Informationen umfassen, die mehrere Kanäle anzeigen, die unterschiedliche Frequenzen aufweisen, wobei die bordseitige Kommunikationsvorrichtung (100) aufweist:
Einstellen eines Kanals, dessen Frequenzband fest ist, in einer ersten Kommunikationseinheit (121) und Einstellen eines Kanals, der sich von dem Kanal unterscheidet, der in der ersten Kommunikationseinheit (121) verwendet wird, in einer zweiten Kommunikationseinheit (122);
Kommunizieren mit der Kommunikationsvorrichtung am Straßenrand über die erste Kommunikationseinheit (121) oder die zweite Kommunikationseinheit (122);
Feststellen, ob die Kommunikation mit der Kommunikationsvorrichtung am Straßenrand eine direkte Kommunikation ist, die nicht durch eine andere bordseitige Kommunikationsvorrichtung weitergeleitet wird;
Benennen eines Kanals aus den mehreren Kanälen, die in den Kanalnutzungsinformationen enthalten sind; und
Umschalten des Kanals der zweiten Kommunikationseinheit (122) auf einen benannten Kanal, der durch die Anwendungseinheit (150) benannt wird,
wobei dann, wenn keine direkte Kommunikation mit der Kommunikationsvorrichtung am Straßenrand durchgeführt wird, die zweite Kommunikationseinheit (122) mit der Kommunikationsvorrichtung am Straßenrand über eine andere bordseitige Kommunikationsvorrichtung kommuniziert, die mit der Kommunikationsvorrichtung am Straßenrand kommuniziert, und
wobei dann, wenn die Kanalnutzungsinformationen durch die zweite Kommunikationseinheit (122) empfangen werden, Verwenden des benannten Kanals, um eine Wegverifizierungsnachricht an die Kommunikationsvorrichtung am Straßenrand zu senden, und Veranlassen der Kanaleinstelleinheit (160), eine Kanalumschaltoperation auf den benannten Kanal durchzuführen, wenn von der Kommunikationsvorrichtung am Straßenrand eine Wegverifizierungsantwortnachricht empfangen wird, die eine Antwort auf die Wegverifizierungsnachricht ist.

4. Steuerverfahren der bordseitigen Kommunikationsvorrichtung (100) nach Anspruch 3, wobei hinsichtlich Paketen, in der ersten Kommunikationseinheit (121) oder der zweiten Kommunikationseinheit (122) empfangen werden, die bordseitige Kommunikationsvorrichtung (100) überprüft, ob ein Multihop-Transfer notwendig ist, und wenn eine weitere Übertragung zu einer anderen bordseitigen Kommunikationsvorrichtung notwendig ist, die Übertragung von Daten von der zweiten Kommunikationseinheit (122) einstellt.

## Revendications

1. Dispositif de communication embarqué (100) installé dans un véhicule et prévu pour établir une communication avec un dispositif de communication routier délivrant des informations d'utilisation de canaux et établissant une communication avec d'autres dispositifs de communication embarqués installés dans d'autres véhicules, les informations d'utilisation de canaux comprenant au moins une information relative à une pluralité de canaux de fréquences différentes, ledit dispositif de communication embarqué (100) comprenant :
une première unité de communication (121) prévue pour communiquer au moyen d'un canal dont la bande de fréquence est fixe ;
une deuxième unité de communication (122) prévue pour communiquer au moyen d'un canal différent du canal utilisé dans la première unité de communication (121) ;
une unité d'évaluation prévue pour déterminer si une communication avec le dispositif de communication routier est une communication directe non relayée par un autre dispositif de communication embarqué, ou non ;
une unité d'application (150) prévue pour désigner un canal de la pluralité de canaux comprise dans les informations d'utilisation de canaux ; et
une unité de réglage de canal (160) prévue pour commuter le canal de la deuxième unité de communication (122) vers un canal désigné par l'unité d'application (150), où, si une communication directe avec le dispositif de communication routier n'est pas possible, la deuxième unité de communication (122) communique avec le dispositif de communication routier au moyen d'un autre dispositif de communication embarqué communiquant avec le dispositif de communication routier, et
où l'unité d'application (150) utilise le canal désigné pour transmettre un message de vérification de chemin au dispositif de communication routier à la réception des informations d'utilisation de canaux via la deuxième unité de communication (122), et provoque l'établissement par l'unité de réglage de canal (160) d'une commutation de canal vers le canal désigné, à la réception d'un message de réponse de vérification de chemin du dispositif de communication routier, en réponse au message de vérification de chemin.

2. Dispositif de communication embarqué (100) selon la revendication 1, où, relativement aux paquets reçus dans la première unité de communication (121) ou la deuxième unité de communication (122), le dispositif de communication embarqué (100) est prévu pour contrôler si un transfert à sauts multiples est nécessaire ou non, et si une autre transmission vers un autre dispositif de communication embarqué est exigée, régler une transmission de données par la deuxième unité de communication (122).

3. Procédé de commande du dispositif de communication embarqué (100) installé dans un véhicule et établissant une communication avec un dispositif de communication routier délivrant des informations d'utilisation de canaux et établissant une communication avec d'autres dispositifs de communication embarqués installés dans d'autres véhicules, les informations d'utilisation de canaux comprenant au moins une information relative à une pluralité de canaux de fréquences différentes, ledit dispositif de communication embarqué (100) comprenant :
le réglage d'un canal dont la bande de fréquence est fixe dans une première unité de communication (121) et le réglage d'un canal différent du canal utilisé dans la première unité de communication (121) dans une deuxième unité de communication (122) ;
la communication avec le dispositif de communication routier au moyen de la première unité de communication (121) ou la deuxième unité de communication (122) ;
la détermination si la communication avec le dispositif de communication routier est une communication directe non relayée par un autre dispositif de communication embarqué, ou non ;
la désignation d'un canal de la pluralité de canaux comprise dans les informations d'utilisation de canaux ; et
la commutation du canal de la deuxième unité de communication (122) vers un canal désigné par l'unité d'application (150),
où, si une communication directe n'est pas établie avec le dispositif de communication routier, la deuxième unité de communication (122) communique avec le dispositif de communication routier au moyen d'un autre dispositif de communication embarqué communiquant avec le dispositif de communication routier, et
où, à la réception des informations d'utilisation de canaux via la deuxième unité de communication (122) un message de vérification de chemin est transmis au dispositif de communication routier au moyen du canal désigné, et provoque l'établissement par l'unité de réglage de canal (160) d'une commutation de canal vers le canal désigné, à la réception d'un message de réponse de vérification de chemin du dispositif de communication routier, en réponse au message de vérification de chemin.

4. Procédé de commande de dispositif de communication embarqué (100) selon la revendication 3, où, relativement aux paquets reçus dans la première unité de communication (121) ou la deuxième unité de communication (122), le dispositif de communication embarqué (100) contrôle si un transfert à sauts multiples est nécessaire ou non, et si une autre transmission vers un autre dispositif de communication embarqué est exigée, règle une transmission de données par la deuxième unité de communication (122).
